# EUROPEAN PATENT SPECIFICATION

(11) **EP 2 129 497 B1**
(45) Date of publication and mention of the grant of the patent: **04.07.2012**
(21) Application number: 08722896.1
(22) Date of filing: 19.03.2008
(51) Int. Cl.: B25F 5/02, H01M 2/10, H01M 10/46, B25H 3/00, H01M 8/00, H01M 8/04

(54) **CORDLESS POWER TOOL WITH FUEL CELL BATTERY AND ACCOMMODATION CASE THEREFOR**
SCHNURLOSES ELEKTROWERKZEUG MIT BRENNSTOFFZELLENBATTERIE UND UNTERBRINGUNGSGEHÄUSE DAFÜR
OUTIL À ALIMENTATION SANS FIL ET BOÎTIER DE RANGEMENT

(30) Priority: 20.03.2007 JP 2007072377; 20.02.2008 JP 2008038515
(43) Date of publication of application: 09.12.2009
(73) Proprietor: Hitachi Koki CO., LTD., Tokyo 108-6020 (JP)
(72) Inventor: ARADACHI, Takao, Hitachinaka-shi, Ibaraki 312-8502 (JP); TAKANO, Nobuhiro, Hitachinaka-shi, Ibaraki 312-8502 (JP)
(74) Representative: Strehl, Peter
(86) International application number: PCT/JP2008/055812
(87) International publication number: WO 2008/126685

(56) References cited:
- DE-U1-202006 015 385
- DE-U1-202006 017 538
- US-A- 6 104 162
- US-A1- 2006 088 751

## Description

### Technical Field

The present invention relates to a cordless power tool in which a front-end tool provided in a housing is driven by an electric motor which uses a battery attached within the housing as a motive power supply unit, and more particularly, to the structure of a cordless power tool capable of efficiently supplying a motive power and an accommodation case thereof.

### Background Art

As a power tool such as a vibrating drill, a cordless power tool is known which does not require supply of a commercial power supply by an electric cord and which can be used in places such as a construction site where there is no power installation. As disclosed in JP-A-2006-324064, as a motive power supply unit of a cordless power tool, secondary batteries such as a Nickel-Cadmium battery (NiCd battery), a Nickel-Hydrogen battery, or a Lithium-ion battery are generally used.

However, the secondary batteries need to be recharged by a charging device which is powered by an alternating-current power supply unit such as a commercial power supply when the capacity usable as a motive power supply unit of a power tool is completely consumed. For this reason, when the cordless power tool is used at places such as the outdoors where there is no installation for a commercial power supply, though the secondary batteries can be used as a motive power supply unit of the cordless power tool, there is an inconvenience that users have to equip a charging device for charging the secondary batteries and an alternating-current power supply unit for powering the charging device. In particular, in an outdoor working environment such as a construction site where a power tool is used, it is often difficult to obtain a power supply unit, and moreover, equipping a comparatively bulky device such as an electric generator as a power supply unit may impose much cost on the user of the power tool.

Since a charge of the secondary batteries requires a predetermined charging time, in order to increase the working efficiency, it is required to charge plural secondary batteries in advance to prepare spare secondary batteries. If the spare secondary batteries are not prepared, the work by the power tool has to be interrupted during charging of the secondary battery set to the power tool, whereby the working efficiency is decreased.

Further, since particularly, batteries for power tools require a large capacity and a large power, a battery pack has a structure in which eleven to twenty battery cells are connected in serial or parallel to a number of battery cells. As a result, the batteries become relatively heavy and bulky and it is thus difficult to carry them to a working place.

Regarding NiCd batteries commonly used in a power tool, as they contain a noxious substance such as Cadmium as the constituent substance, when they are worn out, they require a cautious treatment so that they may not cause environmental contamination.

A power tool which has the features included in the first part of claim 1 is known from U.S. Patent No. 6,104,162.

DE 20 2006 017 538 U1 discloses a pneumatically driven drill wherein a water collecting device is disposed close to the drill bit to feed condensation water to a fuel cell connected to the collecting device, the condensation water being generated due to the drill bit contacting the cold surrounding air.

US 2006/0088751 A1 discloses a mobile device for supplying power by means of fuel cells including replaceable fuel cartridges.

### Disclosure of Invention

An object of the present invention is therefore to eliminate the above discussed drawbacks of the prior art by providing a cordless power tool powered by a power supply unit that does not require a charging device and a charging power supply unit.

The present invention as defined in claim 1 eliminates the use of a charging device or the use of a commercial power supply unit by using a fuel cell battery that does not require the supply of a commercial power supply unit as a power supply unit of the power tool.

If the fuel tank or the fuel cartridge for storing or supplying fuel is detachably attached to the housing of the cordless power tool, it is possible to power the power tool only by and at the same time with the replacement of the tank or the cartridge, thereby improving the working efficiency.

Further, since a clean fuel without containing contaminants can be used as a fuel of the fuel cell battery, it is possible to solve the problem of environmental contamination.

In addition, it is possible to provide a cordless power tool that can be used at a working place where there is no commercial power supply.

The above and other objects, the above and other features and advantages of the present invention will become more apparent upon reading of the following description of this specification and the accompanying drawings.

### Brief Description of the Drawings

FIG. 1 is a configuration diagram of a cordless power tool according to a first embodiment, not being part of the present invention.
FIG. 2 is a configuration diagram of a cordless power tool according to a second embodiment, not being part of the present invention.
FIG. 3 is a configuration diagram of a cordless power tool according to a third embodiment, being part of the present invention.
FIG. 4 is a configuration diagram of a cordless power tool according to a fourth embodiment, being part of the present invention.
FIG. 5 is a configuration diagram of a cordless power tool according to a fifth embodiment, not being part of the present invention.
FIG. 6 is a structure diagram of a fuel cell battery used in the cordless power tool of the present invention.
FIG. 7 is a configuration diagram of a cordless power tool according to a sixth embodiment, not being part of the present invention.
FIG. 8 is a functional block diagram of the cordless power tool according to the sixth embodiment.
FIG. 9 is an external view of an accommodation case for power tools.
FIG. 10 is a layout diagram of the accommodation case for power tools.
FIG. 11 is a configuration diagram of the accommodation case for power tools.

### Description of Reference Numerals

20: POWER TOOL
20a: BODY HOUSING
20b: HANDLE HOUSING
21: MOTOR
22: MOTOR CONTROL CIRCUIT
22a, 22b: PAIRED POWER INPUT TERMINAL
23: TRIGGER SWITCH
23a: POWER SWITCH
24: FRONT END TOOL (PLUS BIT)
25: LOAD
26: SWITCH DETECTION CIRCUIT
30: FUEL CELL BATTERY UNIT
31: FUEL CELL BATTERY BODY
31a, 31b: PAIRED POWER TERMINALS
31c: INLET PORT
31d: ELECTROLYTE MEMBRANE
31e: LATCH MEMBER
32: FUEL CARTRIDGE
32a: SUPPLY PORT
33: FUEL TANK
33a: SUPPLY PORT
34: INLET PORT
35: FUEL SUPPLIER
36: FUEL CONTAINER
37: CHARGING CONTROL CIRCUIT
40: SECONDARY BATTERY UNIT
41: SECONDARY BATTERY (LITHIUM ION BATTERY)
41a: LATCH GROOVE
42: PROTECTION CIRCUIT
43: DIODE
50: CHARGER
60: ACCOMMODATION CASE
61: ACCOMMODATION-SIDE CASE PORTION
61a to 61d: ACCOMMODATION PORTION
62: COVER-SIDE CASE PORTION
63, 64: HINGE
65: HANDLE (GRIP)
66: INTERCONNECTION

### Best mode for Carrying out of the Invention

Now, embodiments will be described with reference to the drawings. It is noted that elements having the same functions are denoted by the same reference symbols in the entire drawings for describing the embodiments and repetitive description thereof will not be given.

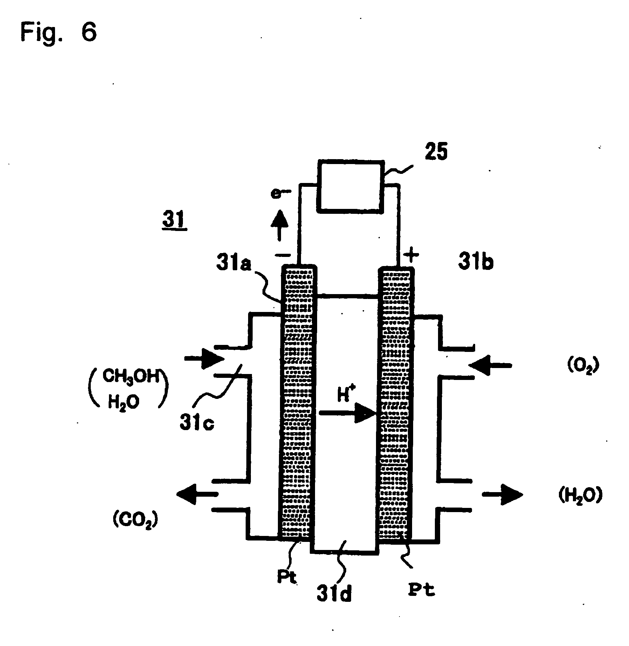

First, regarding a configuration example of a fuel cell battery used in the present invention, an example of a direct methanol fuel cell (DMFC) shown in FIG. 6 will be described.

As a known fuel cell battery, by the electrolyte used, there are an alkaline fuel cell (AFC), a polymer electrolyte fuel cell (PEFC), a molten carbonate fuel cell (MCFC), and a solid oxide fuel cell (SOFC). In all of the above fuel cell batteries, hydrogen and oxygen react to generate electricity and discharge water as a product while a different electrolyte is used for each type.

In the case of polymer electrolyte fuel cells (PEFC), a polymer proton exchange membrane is used as an electrolyte, hydrogen ions move within the exchange membrane when current is led out, and the working temperature is in the range of from a room temperature to about 100 °C. Since the power generation efficiency is relatively high, such fuel cell batteries are suitably for use in a power tool. As a typical example of fuel cell, a direct methanol fuel cell (DMFC) is widely known in which hydrogen is used as fuel by allowing a direct reaction to be carried out from a hydrogen compound such as methanol. Hereinafter, the direct methanol fuel cell (DMFC) will be described with reference to a schematic diagram shown in FIG. 6.

In FIG. 6, a fuel cell 31 includes an inlet port 31c of an aqueous methanol solution, a fuel electrode or hydrogen electrode (negative electrode) 31a, an air electrode (positive electrode) 31b, and an electrolyte membrane 31d inserted between the fuel electrode 31a and the air electrode (positive electrode) 31b. When the aqueous methanol solution is supplied through the inlet port 31c to the fuel electrode 31a (a catalyst layer such as Platinum), the methanol solution is decomposed by the catalyst layer (Pt) into hydrogen ions, electrons, carbon dioxides, and the like. The decomposed electrons flow through a load circuit 25 toward the air electrode 31b. By the flow of the electrons, electricity is supplied to the load circuit 25. Meanwhile, air is filled on the air electrode 31b side, and by the action of the catalyst layer (Pt) provided on the air electrode 31b side, oxygen in the air reacts with the electrons flown thereto to produce water and the water is discharged. In the course of such processes, electric potential difference is produced between paired power terminals 31a and 31b. In the fuel cell 31, since the power generation is carried out by only the refill of fuel (for example, aqueous methanol solution), a charge by a charging power supply unit is not needed unlike the secondary batteries. The present invention is made by the finding that the load circuit 25 such as a motor driving circuit of a power tool can be operated by using the fuel cell 31. Hereinafter, embodiments in which the cordless power tool is employed in an impact driver will be described.

### Embodiment 1

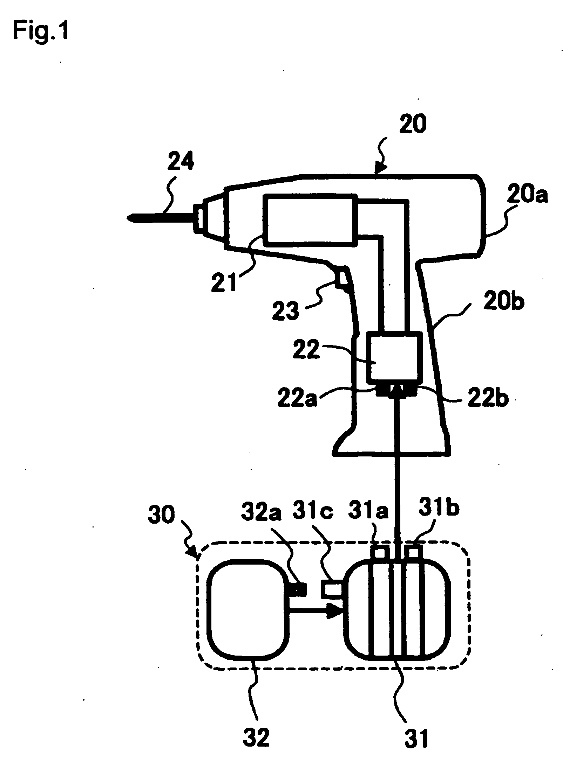

A first embodiment will be described with reference to FIG. 1. A power tool 20 includes a body housing 20a and a handle housing 20b. A motor 21 is attached within the body housing 20a, and a control circuit unit 22 including a motor driving circuit is attached within the handle housing 20b. A trigger switch 23 is electrically connected to the control circuit unit 22 to supply control signals to the control circuit unit 22, thereby starting or stopping the operation of the power tool 20. The motor 21 is constructed, for example, by a brushless DC motor, and a motive power is transmitted from the motor 21 through a motive power transmission mechanism (not shown) to a front-end tool 24. The front-end tool 24 is detachably attached to the body housing 20a so as to protrude from one end of the body housing 20a and is constructed, for example, by a plus bit for fastening a screw.

The fuel cell unit 30 includes a unit formed, for example, of a plastic material and accommodated in a case, a fuel cell body 31 having the above-described structure, and a fuel cartridge 32 for supplying fuel such as aqueous methanol solution to the fuel cell body 31. The fuel cell body 31 has paired electrode terminals 31a and 31b and a fuel inlet port 31c. The fuel cartridge 32 has a structure wherein the fuel cartridge can be detachably attached to the fuel cell body 31. When the fuel cartridge 32 is attached to the fuel cell body 31, a supply port 32a of the fuel cartridge 32 is inserted into the inlet port 31c of the fuel cell body 31 so that fuel is supplied from the fuel cartridge 32 to the fuel cell body 31. With this configuration, the fuel cell body 31 can produce electricity based on the fuel of the fuel cartridge 32.

Meanwhile, the fuel cell unit 30, which is a combination of the fuel cell body 31 and the fuel cartridge 32, has a structure wherein the fuel cell unit can be detachably attached to the lower end side of the handle housing 20b of the power tool 20. That is, the fuel cell unit 30 has a structure that can be detachably attached to the power tool body 20. When the fuel cell unit 30 is attached to the lower end of the handle housing 20b, the paired electrode terminals 31a and 31b of the fuel cell body 31 have a structure wherein the paired electrode terminals are electrically connected to the paired power input terminals 22a and 22b of the control circuit unit 22. With this configuration, the electricity generated on the paired electrode terminals 31a and 31b of the fuel cell body 31 is supplied through the paired power input terminals 22a and 22b to the control circuit unit 22, whereby the generated electricity can be used as a motive power source of the motor 21 of the power tool 20.

According to the configuration described above, users can carry a spare fuel cartridge 32 along with the power tool 20 to a working place and when the fuel of the fuel cartridge 32 the users are using is used up by the use of the power tool 20, users can operate the power tool 20 without interruption by replace with the spare, new fuel cartridge 32. In this case, the replacement of the fuel cell 32 can be carried out in short time in such a sequence that the fuel cell unit 30 is first detached from the power tool 20 and the fuel cartridge 32 is detached from the fuel cell unit 30 detached from the power tool 20. A fuel meter for checking a fuel amount may be provided to the fuel cell body 31 (the case of the fuel cell unit 30) or the fuel cartridge 32.

With the configuration described above, it is possible to efficiently use the power tool 20 for a long time even at a working place where there is neither a power installation such as a commercial power supply nor an installation for a charging device.

### Embodiment 2

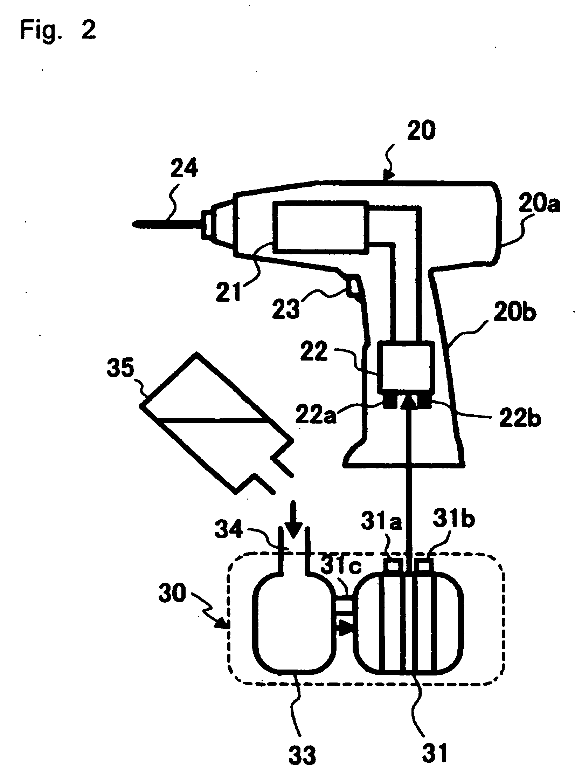

FIG. 2 shows a configuration diagram of a second embodiment. Like the first embodiment described above, the fuel cell unit 30 has a structure wherein the fuel cell unit can be detachably attached to the lower end side of the handle housing 20b of the power tool 20.

The fuel cell unit 30 differs from that of the first embodiment in that the fuel cell unit of the second embodiment uses a fuel tank 33 instead of using the disposable fuel cartridge 32 (see FIG. 1). The fuel tank 33 has a structure in which the fuel tank is coupled to the inlet port 31c of the fuel cell body 31 to supply the fuel in the fuel tank 33 to the fuel cell body 31. The fuel tank 33 also has a structure in which when a capacity indicator (not shown) of the fuel tank 33 shows that the fuel in the fuel tank 33 is decreasing, fuel can be refilled or replaced from a fuel supplier 35 through an inlet port 34 of the fuel tank. With this configuration, the fuel cell body 31 can generate electricity and the generated electricity can be used as a motive power source of the motor 21 of the power tool 20.

According to this embodiment, since the fuel tank 33 installed within the fuel cell unit 31 has a structure wherein fuel can be supplied from the outside, users can carry the fuel supplier 35 filled with fuel to a working place and can use the power tool 20 for a long time.

### Embodiment 3

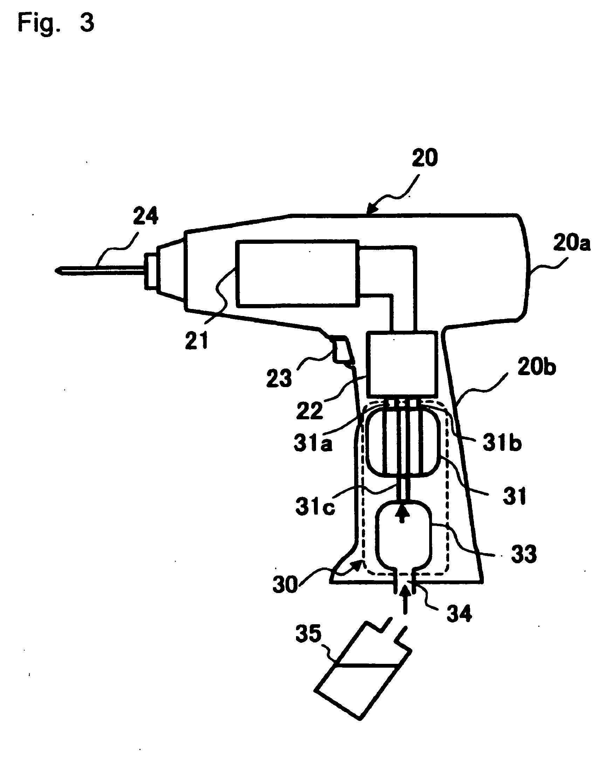

FIG. 3 is a configuration diagram showing a third embodiment. Basically, the fuel cell unit 30 has the same structure as the second embodiment and has a structure wherein the fuel cell unit can be detachably attached within the handle housing 20b of the power tool 20. The fuel cell unit 30 uses a fuel tank 33 coupled to the inlet port 31c of the fuel cell body 31. The fuel tank 33 has a structure in which fuel can be supplied from the fuel supplier 35 through the inlet port 34 of the fuel tank 33. The fuel tank 33 also has a structure in which the other end of the fuel tank is coupled to the inlet port 31c of the fuel cell body 31 so that the fuel in the fuel tank 33 can be supplied to the fuel cell body 31. With this configuration, the fuel cell body 31 can generate electricity and the generated electricity can be used as a motive power source of the power tool 20.

In the configuration described above, when it is desired to supply the fuel tank 33 with fuel from the outside, the fuel cell unit 30 detachably attached within the handle housing 20b is first detached from the handle housing 20b and fuel is supplied by the fuel supplier 35 through the inlet port 34 of the fuel tank 33 of the fuel cell unit 30.

### Embodiment 4

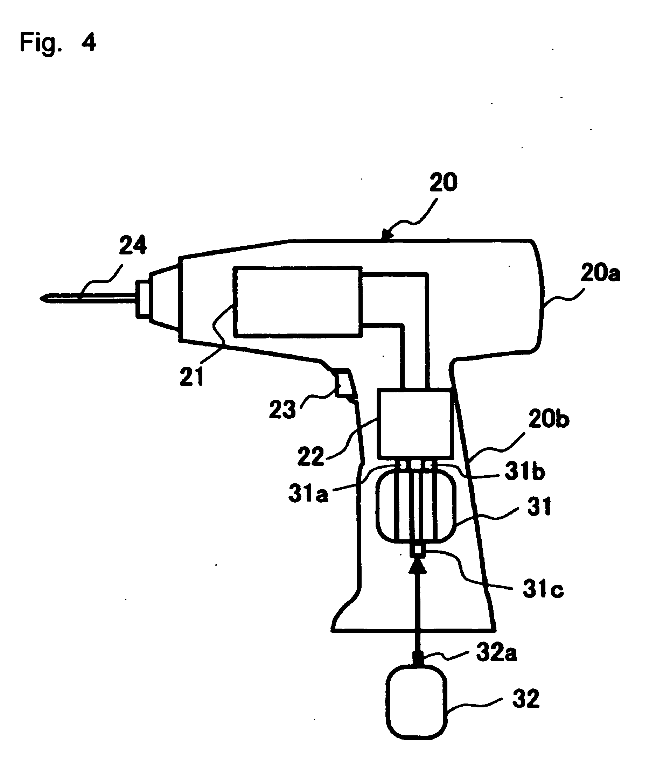

FIG. 4 is a configuration diagram showing a fourth embodiment. The power tool 20 includes a motor 21 accommodated within the body housing 20a, a control circuit unit 22 accommodated within the handle housing 20b and controlling the motor 21, and a fuel cell body 31. That is, the fuel cell body 31 is incorporated within the power tool 20.

Meanwhile, a fuel cartridge 32 filled with fuel such as aqueous methanol solution is detachably attached to the fuel cell body 31 and has a supply port 32a that is detachable from the inlet port 31c of the fuel cell body 31. With this configuration, the fuel in the fuel cartridge 32 is transported to the fuel cell body 31, and the fuel cell body 31 can generate electricity. The generated electricity is used as a motive power source of the power tool 20.

When the capacity of the fuel cell body 31 is lowered by the use of the power tool 20, users can replace the fuel cartridge 32 with a new fuel cartridge.

### Embodiment 5

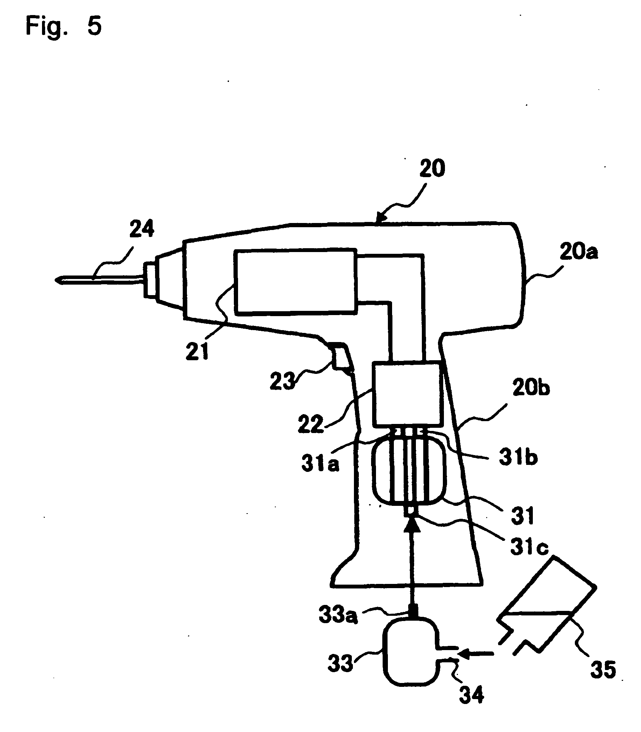

FIG. 5 is a configuration diagram showing a fifth embodiment. Like the fourth embodiment described above, the power tool 20 includes a motor 21 accommodated within the body housing 20a, a control circuit unit 22 accommodated within the handle housing 20b and controlling the motor 21, and a fuel cell body 31.

Meanwhile, a fuel tank 33 filled with fuel such as aqueous methanol solution is used instead of the fuel cartridge 32 (see FIG. 4) used in the fourth embodiment. The fuel tank 33 is detachably attached to the fuel cell body 31 and has a supply port 33a that is detachable from the inlet port 31c of the fuel cell body 31. That is, the fuel tank 33 is configured so as to be detachable from the fuel cell body 31 incorporated within the power tool 20. Further, the fuel tank 33 has a structure wherein the fuel in the fuel tank 33 can be supplied to the fuel cell body 31. With this configuration, the fuel cell body 31 can generate electricity and the generated electricity is used as a motive power source of the power tool 20.

When the capacity is lowered by the use of the power tool 20, users can refill or replace fuel from a fuel supplier 35 filled with fuel through an inlet port 34 of the fuel tank 33.

### Embodiment 6

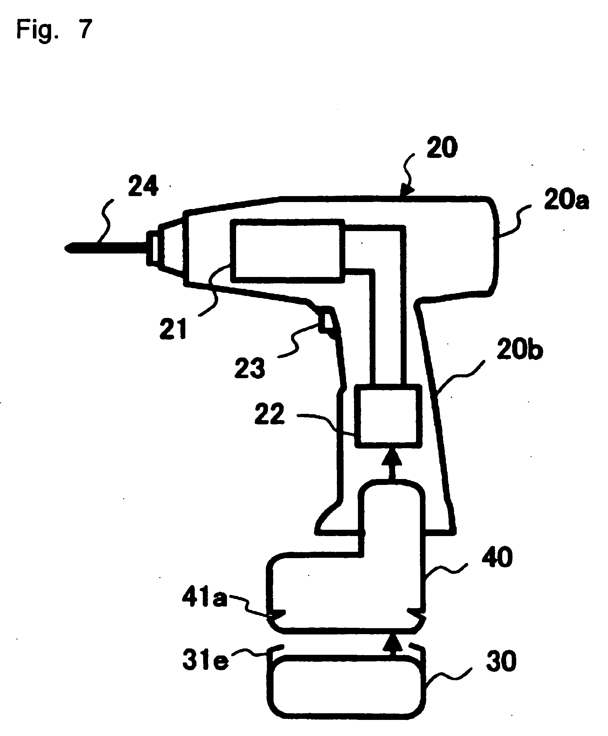

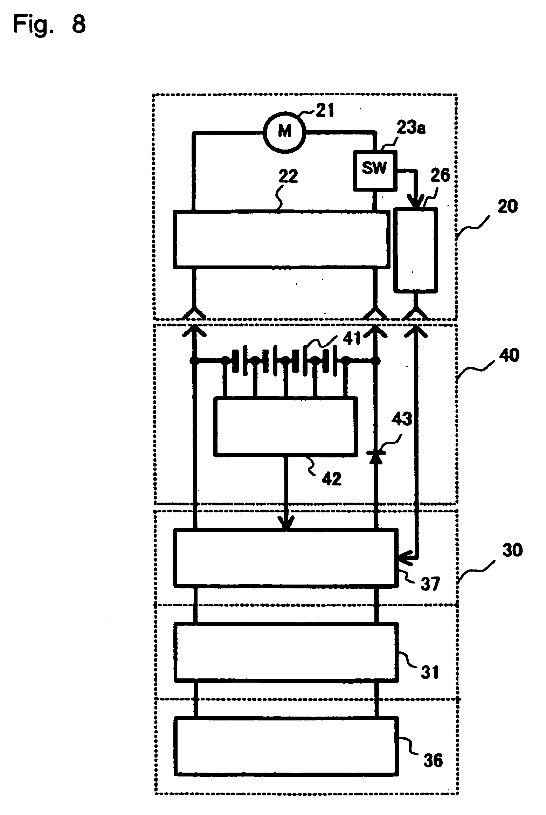

FIG. 7 shows a schematic structural diagram of a cordless power tool according to a sixth embodiment, and FIG. 8 shows a functional block diagram of the cordless power tool shown in FIG. 7. In this embodiment, a cordless power tool has a so-called hybrid cordless power tool in which as a supply source of an electric energy to the motor 21, both a secondary battery unit (battery pack) 40 that uses a conventional lithium ion battery and the above-described fuel cell unit 30 are used. Here, the secondary battery unit 40 means an assembly of the secondary battery 41 (see FIG. 8) or an assembly including a protection circuit 42 (see FIG. 8) electrically connected to the secondary battery 41. The protection circuit 42 is a circuit employed particularly in a lithium ion battery 41, that is, a circuit including a protection IC according to the prior art provided to prevent over-charging and over-discharging of the lithium ion battery 41 or damage of the battery by a surge current.

The secondary battery unit 40 may be other secondary batteries other than the lithium ion battery such as a NiCd battery or a Nickel-Hydrogen battery.

The secondary battery unit 40 is detachably attached to the power tool body 20 and the fuel cell unit 30 is detachably coupled and electrically connected to the secondary battery unit 40 at the lower end surface of the secondary battery unit 40. As an attachment/detachment mechanism of the secondary battery unit 40 and the power tool body 20, in a manner similar to the prior art, a structure may be employed in which a latch member is provided at the secondary battery unit 40 side and a latch groove engaging with the latch member is provided at the power tool body 20 side. As an attachment/detachment mechanism of the secondary battery unit 40 and the fuel cell unit 30, an engagement mechanism known in the past may be employed in which an elastic latch member (claw member) 31e is provided at one of the attachment portions and a latch groove (engagement groove) 41a engaging with the latch member is provided at the other attachment portion. Also, in the first embodiment and the like, a latch member is provided at the fuel cell unit side and a latch groove is provided at the power tool body side, whereby the fuel cell unit can be detachably attached to the power tool body.

Like the embodiments described above, the fuel cell unit 30 includes a fuel cell body 31 and a fuel container 36 (a container including the fuel cartridge 32 and the fuel tank 33). The fuel cell unit 30 also includes a charging control circuit 37 for charging the secondary battery 41 of the secondary battery unit 40. In this embodiment, the charging control circuit 37 is integrated within the fuel cell unit 30; however, the charging control circuit may be attached within the secondary battery unit 40 or may be configured as a separate unit. Since the fuel cell unit 30 is detachably attached at the lower side of the secondary battery unit 40, an operator is disturbed when the power tool 20 is gripped and it is possible to maintain the workability without any difference in the balance of weight from a conventional power tool. The charging control circuit 37 is electrically connected between the secondary battery unit 40 and the fuel cell unit 30. Accordingly, when the output voltage of the secondary battery unit 40 is low and when the operation of the electric motor 21 is stopped, the charging control circuit 37 controls the fuel cell unit 30 to charge the secondary battery unit 40. This operation will be described below.

When the electric motor 21 is operated, as shown in FIG. 8, the secondary battery unit 40 serves as a driving power source of the motor 21 and supplies electricity directly to a motor control circuit 22 including a motor driving circuit. For this reason, when a power switch 23a is turned on interlocked with the trigger switch 23, a switch detection circuit 26 detects the on state of the power switch 23a and outputs an on detection signal to the charging control circuit 37. Then, the secondary battery unit 40 supplies power to the motor control circuit 22 to drive the motor 21.

When the operation of the electric motor 21 is stopped, the power switch 23a is turned off. The switch detection circuit 26 detects the off state of the power switch 23a and outputs an off detection signal to the charging control circuit 37. The charging control circuit 37 controls the fuel cell unit 30 to charge the secondary battery 41 based on the detection signal. That is, the fuel cell unit 30 functions as a charger for supplying an electrical energy to the secondary battery 41 when the operation of the power tool body 20 is stopped. Here, a unidirectional diode 43 is inserted in a charging path in the direction for supplying a charging current. When the voltage of the secondary battery 41 is greater than the fuel cell unit 30 or when the voltage of the fuel cell unit 30 is low, the diode 43 functions to block the charging path so that the fuel cell unit 30 does not act as a load to the secondary battery 41.

According to the sixth embodiment having such a configuration, the cordless power tool 20, which requires a relatively large load current, is supplied with electricity from a high-power lithium ion secondary battery 41, and the secondary battery 41 having consumed electricity is replenished with electricity by the fuel cell (fuel cell unit) 30. It is possible to prolong the operation time of the cordless power tool at a working place such as a construction site where there is no commercial power supply installation.

The sixth embodiment may be embodied in accordance with the following modified examples in order to facilitate the charging of the secondary battery 40 or the fuel replenishment of the fuel cell 30.
(1) The secondary battery 40 may be detachably attached to the power tool body 20 and the fuel cell 30 may be detachably attached to the secondary battery 40. With this configuration, the secondary battery 40 can be charged from a commercial alternating-current power supply unit via a charger (not shown) . In addition, the replacement of the fuel container 36 of the fuel cell 30 is made easy.
(2) The secondary battery 40 and the fuel cell 30 may be assembled as a connectable assembly, and this assembled structure (40 and 30) may be detachably attached to the power tool body 20.
(3) The fuel container 36 of the fuel cell 30 may be detachably attached to the fuel cell body 31 in a manner similar to the embodiments described above.
(4) Although the charging control circuit 37 is electrically connected between the fuel cell 30 and the secondary battery 40 in order to allow the fuel cell 30 to charge the secondary battery 40, the fuel cell 30 may be electrically connected to the charging control circuit 37 and detachably attached to the secondary battery 40.
(5) Since the protection circuit 42 of the secondary battery unit 40 detects the over-charging and over-discharging of the secondary battery unit, when the protection circuit 42 has detected that the lithium ion battery 41 is over-charged by the charging of the fuel cell unit 30, the charging control circuit 37 may receive an over-charging signal from the protection circuit 42 and stop the charging. Moreover, when the protection circuit 42 has detected the over-discharging, the secondary battery unit 40 may be charged by the fuel cell unit 30 regardless of the signal from the switch detection circuit 26. In this case, the power tool 20 may be driven by the fuel cell unit 30.

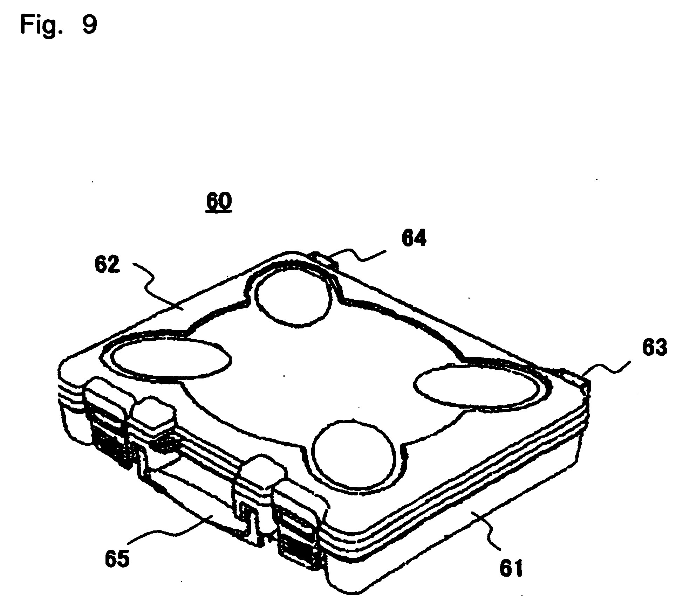

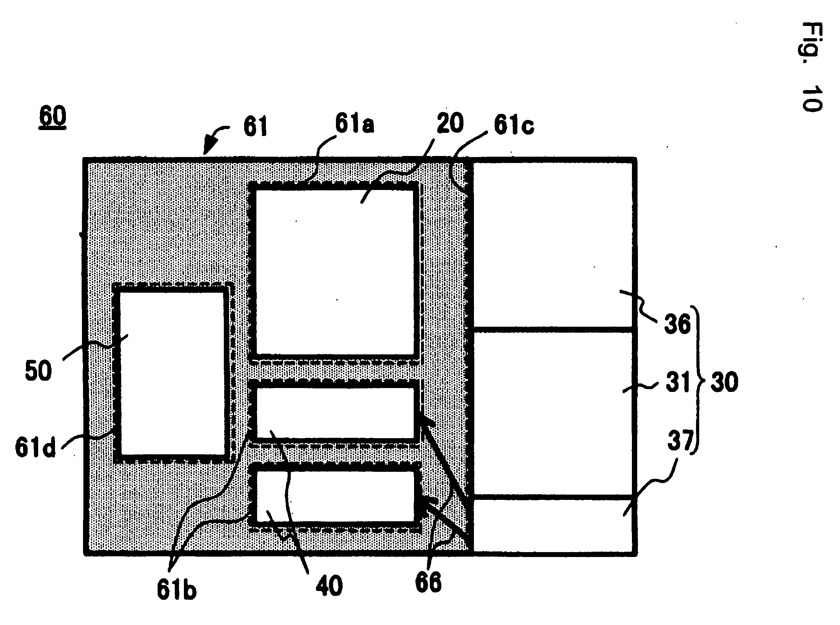

FIGS. 9 and 10 show configuration diagrams of an accommodation case 60 for power tools, which accommodate the cordless power tool according to the embodiments described above and facilitates the carrying to a working plate and which accommodate and stores the cordless power tool when it is not used. In particular, the accommodation case 60 is suitable for use as a carrying case for carrying the cordless power tool to a working place where the use of a commercial alternating-current power supply unit for charging the secondary battery of the power tool is limited or to a working place where there is no commercial alternating-current power supply installation.

As shown in FIG. 9, the accommodation case 60 includes an accommodation-side case portion (lower case portion) 61, a cover-side case portion (upper case portion) 62 that is attached to the accommodation-side case portion 61 so as to be openable via paired hinges 63 and 64, and a handle (grip) 65. As shown in the layout diagram of FIG. 10, an accommodation portion of the accommodation-side case portion 61 includes a portion 61a for accommodating the power tool body 20 (to which the secondary battery 40 and the fuel cell 30 are attached), a portion 61b for accommodating a spare secondary battery 40 and the fuel cell 30 in a state that they are detached from the power tool body 20), a portion 61c for accommodating a spare fuel cell 30, and a portion 61d for accommodating a charger 50 for charging the secondary battery 40 from an alternating-current power supply unit.

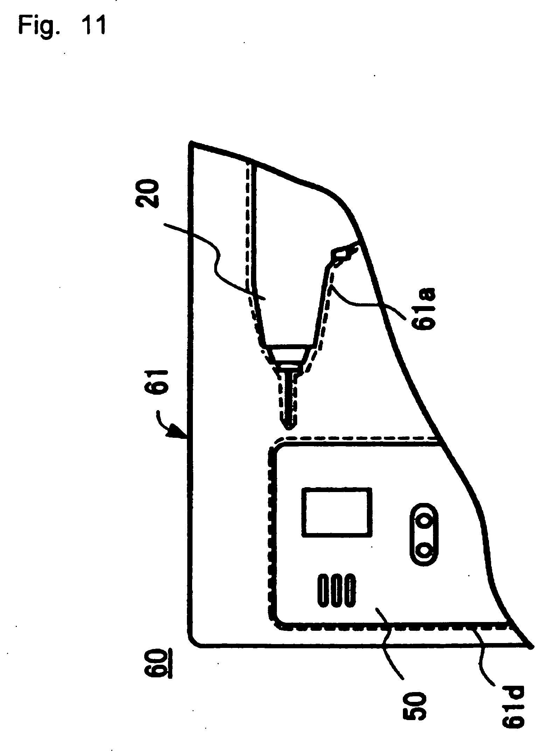

As shown in FIG. 11, the portions (accommodation portions) 61 to 61d are separated from each other and formed as groove portions or segregate portion (nests) that engage with the external shape of the tool elements accommodated therein. When the power tool body 20 and the like are accommodated in the respective accommodation portions 61a to 61d of the accommodation-side case portion 61 in predetermined directions and the cover-side case portion 62 is closed, it is easy to carry the power tool body 20, the batteries 30 and 40, and the like.

The fuel cell body 31, the charging control circuit unit 37, and the fuel container 36 accommodated in the accommodation portion 61c constitute a charging circuit unit of the secondary battery 40 as shown in FIG. 8 and are electrically connected to the secondary battery 40 via an interconnection 66. With this configuration, the spare secondary battery 40 is charged during accommodation in the accommodation case 60, that is, during carriage of the power tool body or during the storage. In this case, a dummy signal (switch off signal) is input to an input signal terminal from the switch detection circuit 26 (see FIG. 8) of the charging control circuit unit 37. As another modified example, a switch may be provided to the charging control circuit 37, and when the secondary battery unit 40 is accommodated in the accommodation case 60, the switch may be operated to allow the fuel cell unit 30 to charge the secondary battery unit 40 even when the trigger switch 23 of the power tool 20 is not in the on state.

Further, the fuel cell unit 30 may be attached within the accommodation case 60 (for example, at the portion 61c in FIG. 10), and when the secondary battery unit 40 is accommodated and the interconnection 66 is connected, the secondary battery unit 40 may be charged automatically or manually by the fuel cell unit 30. In this case, the fuel container 36 may be detachably and replaceably attached to the accommodation case 60 and a fuel tank may be provided so that fuel can be refilled.

According to the accommodation case 60 having such a configuration, at a working place where there is a commercial alternating-current power supply installation, the secondary battery 40 can be charged by the charger 45 to supply a driving power to the power tool 20 while at a working place where there is no commercial alternating-current power supply installation, the secondary battery 40 can be charged by the fuel cell 30. Accordingly, it is possible to carry the cordless power tool adaptable to a working place.

As is obvious from the description of the embodiments, since the fuel tank or the fuel cartridge for storing or supplying fuel is detachably attached to the housing of the cordless power tool, it is possible to power the power tool only by and at the same time with the replacement of the fuel container including the tank or the cartridge. Accordingly, the working efficiency is improved. Further, since a clean fuel without containing contaminants can be used as a fuel of the fuel cell battery, it is possible to solve the problem of environmental contamination.

In addition, the present invention can be applied to a cordless power tool that uses a conventional secondary battery, thereby providing a cordless power tool capable of providing a longer working time.

## Claims

1. A cordless power tool, comprising:
a tool body having an electric motor (21) and a front-end tool (24) driven by the motor (21); and
a fuel cell battery unit (30) disposed within the tool body for supplying power to the motor (21),
**characterized in that**
the fuel cell battery unit (30) includes a fuel cell battery body (31) and a fuel tank (33) or fuel cartridge (32) for storing fuel and supplying it to the fuel cell battery body (31), and
the fuel tank (33) or fuel cartridge (32) is detachably attached within the tool body separate from the fuel cell battery body (31).

2. The tool of Claim 1, wherein fuel cell battery unit (30) is detachably attached to the tool body.

3. The tool of Claim 1, wherein the fuel cell battery body (31) is incorporated within the tool body and the fuel cartridge (32) or fuel tank (33) is detachably attached within tool body.

## Patentansprüche

1. Schnurloses Elektrowerkzeug mit
einem Werkzeuggehäuse mit einem Elektromotor (21) und einem von diesem angetriebenen vorderen Werkzeug (24) und
einer in dem Werkzeuggehäuse angeordneten Brennstoffzellen-Batterieeinheit (30) zur Speisung des Motors (21),
**dadurch gekennzeichnet, dass**
die Brennstoffzellen-Batterieeinheit (30) ein Brennstoffzellen-Batteriegehäuse (31) und einen Brennstofftank (33) oder eine Brennstoffpatrone (32) zur Speicherung von Brennstoff und dessen Zuführung an das Brennstoffzellen-Batteriegehäuse (31) aufweist und
der Brennstofftank (33) beziehungsweise die Brennstoffpatrone (32) separat von dem Brennstoffzellen-Batteriegehäuse (31) abnehmbar innerhalb des Werkzeuggehäuses angebracht ist.

2. Werkzeug nach Anspruch 1, wobei die Brennstoffzellen-Batterieeinheit (30) abnehmbar an dem Werkzeuggehäuse angebracht ist.

3. Werkzeug nach Anspruch 1, wobei das Brennstoffzellen-Batteriegehäuse (31) in das Werkzeuggehäuses eingebaut und die Brennstoffpatrone (32) beziehungsweise der Brennstofftank (33) innerhalb des Werkzeuggehäuses abnehmbar angebracht ist.

## Revendications

1. Outil électrique sans fil comportant :
un corps d'outil ayant un moteur électrique (21) et un outil frontal (24) entraîné par le moteur (21), et
une unité de batterie de piles à combustible (30) disposée dans le corps d'outil pour fournir de l'énergie au moteur (21),
**caractérisé en ce que**
l'unité de batterie de piles à combustible (30) inclut un corps de batterie de piles à combustible (31) et un réservoir à combustible (31) ou une cartouche à combustible (32) pour stocker du combustible et délivrer celui-ci au corps de batterie de piles à combustible (31), et
le réservoir à combustible (33) ou la cartouche à combustible (32) est relié de manière amovible dans le corps d'outil séparé du corps de batterie de piles à combustible (31).

2. Outil selon la revendication 1, dans lequel l'unité de batterie de piles à combustible (30) est reliée de manière amovible au corps d'outil.

3. Outil selon la revendication 1, dans lequel le corps de batterie de piles à combustible (31) est incorporé dans le corps d'outil et la cartouche de combustible (32) ou le réservoir de combustible (33) est relié de manière amovible dans le corps d'outil.
